(19) **Europäisches Patentamt / European Patent Office / Office européen des brevets**

(11) **EP 2 720 987 B1**

(12) **FASCICULE DE BREVET EUROPEEN**

(45) Date de publication et mention de la délivrance du brevet:
**05.12.2018 Bulletin 2018/49**

(21) Numéro de dépôt: **12738498.0**

(22) Date de dépôt: **15.06.2012**

(51) Int Cl.:
*C03C 25/32* (2018.01)       *C08K 7/14* (2006.01)
*C09J 103/02* (2006.01)      *D04H 1/64* (2012.01)
*D04H 1/4218* (2012.01)      *C09J 103/00* (2006.01)
*C08L 3/00* (2006.01)        *C08L 5/00* (2006.01)
*C08L 5/02* (2006.01)        *C08K 5/42* (2006.01)
*C08K 5/092* (2006.01)       *C08K 5/43* (2006.01)
*C09J 105/00* (2006.01)      *C08K 3/30* (2006.01)
*C09J 11/06* (2006.01)

(86) Numéro de dépôt international:
**PCT/FR2012/051346**

(87) Numéro de publication internationale:
**WO 2012/172265 (20.12.2012 Gazette 2012/51)**

(54) **COMPOSITION D'ENCOLLAGE POUR LAINE MINERALE A FAIBLE EMISSION DE COMPOSES ORGANIQUES VOLATILS, ET PRODUITS ISOLANTS OBTENUS.**

SCHLICHTUNGSZUSAMMENSETZUNG FÜR MINERALWOLLE MIT NIEDRIGER EMISSION VON FLÜCHTIGEN ORGANISCHEN VERBINDUNGEN UND DARAUS GEWONNENE ISOLIERPRODUKTE

SIZING COMPOSITION FOR MINERAL WOOL HAVING A LOW EMISSION OF VOLATILE ORGANIC COMPOUNDS, AND INSULATING PRODUCTS OBTAINED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **17.06.2011 FR 1155313**

(43) Date de publication de la demande:
**23.04.2014 Bulletin 2014/17**

(73) Titulaire: **Saint-Gobain Isover**
**92400 Courbevoie (FR)**

(72) Inventeurs:
• **JAFFRENNOU, Boris**
  **F-75019 Paris (FR)**
• **KAPLAN, Benjamin**
  **F-75009 Paris (FR)**
• **GIGNOUX, Vincent**
  **F-60300 Chamant (FR)**

(74) Mandataire: **Saint-Gobain Recherche**
**Département Propriété Industrielle**
**39 Quai Lucien Lefranc**
**93300 Aubervilliers (FR)**

(56) Documents cités:
**WO-A1-2011/002730      WO-A1-2011/019593**
**FR-A1- 2 924 719        US-A1- 2006 252 855**

**Description**

La présente invention se rapporte au domaine des produits d'isolation, thermiques et/ou acoustiques, à base de laine minérale, notamment de verre ou de roche, et d'un liant organique exempt de formaldéhyde.

L'invention concerne plus particulièrement une composition d'encollage apte à réticuler pour former ledit liant organique, qui renferme au moins un saccharide, au moins un acide organique polycarboxylique, au moins un catalyseur d'estérification, et comprend en outre un agent permettant de réduire la quantité de composés volatils émis par le produit d'isolation.

La fabrication de produits d'isolation à base de laine minérale comprend généralement une étape de fabrication de la laine elle-même, qui peut être mise en oeuvre par différents procédés, par exemple selon la technique connue du fibrage par centrifugation interne ou externe. La centrifugation consiste à introduire la matière minérale en fusion (verre ou roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés vers un organe récepteur par un courant gazeux ayant une température et une vitesse élevées, pour y former une nappe de fibres (ou laine minérale).

Pour assurer l'assemblage des fibres entre elles et permettre à la nappe d'avoir de la cohésion, on projette sur les fibres, sur le trajet allant de la sortie du dispositif centrifuge vers l'organe récepteur, une composition d'encollage contenant une résine thermodurcissable. La nappe de fibres revêtues de l'encollage est soumise à un traitement thermique, à une température généralement supérieure à 100°C, afin d'effectuer la polycondensation de la résine et obtenir ainsi un produit d'isolation thermique et/ou acoustique ayant des propriétés spécifiques, notamment une stabilité dimensionnelle, une résistance à la traction, une reprise d'épaisseur après compression et une couleur homogène.

La composition d'encollage à projeter sur la laine minérale se présente généralement sous la forme d'une solution aqueuse renfermant la résine thermodurcissable et des additifs tels qu'un catalyseur de réticulation de la résine, un silane promoteur d'adhérence, une huile minérale anti-poussières, ... La composition d'encollage est le plus souvent appliquée sur les fibres par pulvérisation.

Les propriétés de la composition d'encollage dépendent en grande partie des caractéristiques de la résine. Du point de vue de l'application, il est nécessaire que la composition d'encollage présente une bonne aptitude à la pulvérisation et puisse se déposer à la surface des fibres afin de les lier efficacement.

La résine doit être stable pendant un laps de temps donné avant d'être utilisée pour former la composition d'encollage, laquelle composition est généralement préparée au moment de l'emploi en mélangeant la résine et les additifs mentionnés précédemment.

Sur le plan réglementaire, il est nécessaire que la résine soit considérée comme non polluante, c'est-à-dire qu'elle contienne - et qu'elle génère lors de l'étape d'encollage ou ultérieurement - le moins possible de composés pouvant nuire à la santé humaine ou à l'environnement.

Les résines thermodurcissables les plus couramment utilisées sont des résines phénoliques appartenant à la famille des résols. Outre leur bonne aptitude à réticuler dans les conditions thermiques précitées, ces résines sont solubles dans l'eau, possèdent une bonne affinité pour les fibres minérales, notamment en verre, et sont relativement peu coûteuses.

Les résols sont généralement obtenus par réaction d'un phénol et d'un aldéhyde dans des conditions basiques, dont une certaine proportion de ces composés qui n'ont pas réagi se retrouve dans la résine finale. L'aldéhyde le plus utilisé est le formaldéhyde dont la présence sous forme de formaldéhyde libre n'est pas souhaitée à cause de ses effets nocifs avérés.

La réglementation en matière de protection de l'environnement devenant plus contraignante oblige les fabricants de produits d'isolation à rechercher des solutions permettant d'abaisser encore les niveaux d'émissions indésirables, en particulier de formaldéhyde, que ce soit au niveau de la fabrication des produits d'isolation ou de leur utilisation.

Des solutions de remplacement des résols dans les compositions d'encollage sont connues et se fondent sur l'emploi d'un polymère d'acide carboxylique, notamment d'acide acrylique, et d'un composé hydroxylé.

Dans US 5 340 868, l'encollage comprend un polymère polycarboxylique, un β-hydroxylamide et un acide carboxylique monomérique au moins trifonctionnel.

On connaît aussi des compositions d'encollage qui comprennent un polymère polycarboxylique, un polyol et un catalyseur, lequel catalyseur est un catalyseur contenant du phosphore (US 5 318 990, US 5 661 213, US 6 331 350, US 2003/0008978), un fluoroborate (US 5 977 232) ou bien un cyanamide, un dicyanamide ou une cyanoguanidine (US 5 932 689).

On connaît également des compositions d'encollage comprenant une alcanolamine renfermant au moins deux groupements hydroxyle et un polymère polycarboxylique (US 6 071 994, US 6 099 773, US 6 146 746, US 2002/0091185) associé à un copolymère (US 6 299 936).

Les compositions d'encollage à base d'un polymère polycarboxylique et d'un polyol peuvent renfermer en outre un tensioactif cationique, amphotère ou non ionique (US 2002/0188055) ou un agent de couplage de type silane (US 2004/0002567).

Il a aussi été proposé de remplacer tout ou partie du composé hydroxylé par un saccharide.

Dans US 2005/0215153, il est décrit un encollage formé à partir d'un pré-liant contenant polymère d'acide carboxylique et d'un polyol, et d'une dextrine en tant que co-liant.

Par ailleurs, on connaît une composition adhésive à base de polysaccharides thermoréticulables qui peut être utilisée en tant qu'encollage pour de la laine minérale (US 5 895 804). La composition comprend un polymère polycarboxylique ayant au moins deux groupes fonctionnels acide carboxylique et un poids moléculaire au moins égal à 1000, et un polysaccharide ayant un poids moléculaire au moins égal à 10000.

On connaît également une composition d'encollage aqueuse sans formaldéhyde qui comprend un produit de réaction de Maillard, en particulier associant un sucre réducteur, un acide carboxylique et de l'ammoniaque (WO 2007/014236). Dans WO 2009/019232 et WO 2009/019235, il est proposé de substituer l'acide carboxylique par un précurseur d'acide dérivé d'un sel inorganique, notamment un sel d'ammonium qui présente l'avantage supplémentaire de pouvoir remplacer tout ou partie de l'ammoniaque.

Dans WO 2009/080938, la composition d'encollage pour laine minérale comprend un monosaccharide et/ou un polysaccharide et un acide organique polycarboxylique de masse molaire inférieure à 1000, éventuellement en association avec un catalyseur permettant d'ajuster la température de début de réticulation.

Par ailleurs, il est proposé dans WO 2011/045531 une composition d'encollage pour laine minérale à base d'un sucre réducteur et d'un sel métallique d'acide inorganique choisi parmi les sels de métal alcalin, de métal alcalino-terreux, de métal de transition ou de métal pauvre d'acide inorganique.

La présente invention a pour but de proposer une composition d'encollage pour des produits isolants à base de laine minérale qui est exempte de formaldéhyde et permet de réduire la quantité de produits organiques volatils (COV) émis par le produit d'isolation.

Ce but est atteint selon l'invention par la composition d'encollage pour des produits isolants à base de laine minérale telle que définie à la revendication 1.

Par « saccharide », on entend tout type de saccharide contenant au moins un motif d'ose, réducteur ou non réducteur, y compris les saccharides hydrogénés.

Le saccharide peut être un monosaccharide ou un polysaccharide.

Le monosaccharide est choisi parmi les monosaccharides renfermant 3 à 8 atomes de carbone, de préférence les aldoses et avantageusement les aldoses contenant 5 à 7 atomes de carbone. Les aldoses particulièrement préférés sont les aldoses naturels (appartenant à la série D), notamment les hexoses.

A titre d'exemple de monosaccharide, on peut citer le glucose, le sorbitol, le mannose, le mannitol et le galactose.

A titre d'exemples de polysaccharides, on peut citer les diholosides tels que le maltose, le maltitol, l'isomaltose, l'isomaltitol, le lactose, le lactitol, le cellobiose, le cellobitol, le tréhalose, les isotréhaloses, le saccharose, les isosaccharoses (« isosucroses » en anglais) et le gentobiose ; les triholosides tels que le maltotriose, le maltotritol, le maltotriulose, le raffinose, le mélézitose, le gentianose, l'erlose et l'umbelliférose ; les tétraholosides tels que le stachyose ; les pentaholosides tels que le verbascose ; les dextrines et leurs produits d'hydrogénation ; les mélasses et les amidons.

Les dextrines sont des composés répondant à la formule générale $(C_6H_{10}O_5)_n$ obtenus par hydrolyse partielle d'amidon. Les procédés de préparation des dextrines sont connus. Par exemple, les dextrines peuvent être préparées en chauffant ou en séchant à sec un amidon, généralement en présence d'un catalyseur acide, ce qui conduit à la rupture des molécules d'amylose et d'amylopectine qui constituent ledit amidon en produits de masse molaire plus faible. Les dextrines peuvent aussi être obtenues en traitant l'amidon par voie enzymatique avec une ou plusieurs amylases, notamment microbiennes, aptes à hydrolyser les liaisons de l'amidon. La nature du traitement (chimique ou enzymatique) et les conditions d'hydrolyse ont une incidence directe sur la masse molaire moyenne et la distribution des masses molaires de la dextrine.

Les dextrines conformes à l'invention peuvent être obtenues à partir d'amidon ou de dérivés d'amidon d'origine végétale variée, par exemple issues de tubercules tels que la pomme de terre, le manioc, le maranta et la patate douce, issues de graines telles que le blé, le maïs, le seigle, le riz, l'orge, le millet, l'avoine et le sorgho, issues de fruits tels que le marron, la châtaigne, et la noisette, ou issues de légumineuses telles que le pois et le haricot.

On préfère en particulier les dextrines ayant un équivalent en dextrose DE (« Dextrose Equivalent » en anglais) supérieur ou égal à 5, de préférence supérieur ou égal à 10, avantageusement supérieur ou égal à 15.

De manière conventionnelle, l'équivalent en dextrose DE est défini par la relation suivante :

$$DE = 100 \times \left( \frac{\text{nombre de liaisons glycosidiques rompues}}{\text{nombre de liaisons glycosidiques dans l'amidon initial}} \right)$$

Les produits d'hydrogénation des dextrines peuvent être obtenus par toute méthode connue opérant dans des conditions de pression d'hydrogène et de température élevées, en présence d'un catalyseur choisi dans les groupes IB, IIB, IVB, VI, VII et VIII du tableau périodique des éléments, de préférence parmi le nickel, le platine, le palladium, le cobalt, le molybdène et leurs mélanges. Le catalyseur préféré est le nickel de Raney.

Les mélasses sont des résidus de raffinage de sucre extrait notamment de la canne et de la betterave qui contiennent une forte teneur en glucides, de l'ordre de 40 à 60 % en poids. L'essentiel des glucides de la mélasse est constitué par du saccharose.

Les mélasses conformes à l'invention renferment de préférence de 45 à 50 % en poids de glucides totaux, exprimés en saccharose.

Les mélasses de betterave sont particulièrement préférées.

De préférence, le polysaccharide renferme au moins un motif choisi parmi les aldoses précités, avantageusement le glucose. Sont particulièrement préférés les polysaccharides qui sont constitués majoritairement (à plus de 50 % en poids) de motifs de glucose.

On préfère le glucose, les dextrines et les mélasses, avantageusement le glucose et les dextrines.

Par « acide organique polycarboxylique », on entend un acide organique comprenant au moins deux fonctions carboxyliques, de préférence au plus 50, avantageusement au plus 30 et mieux encore au plus 20 fonctions carboxyliques.

L'acide organique polycarboxylique joue le rôle d'agent de réticulation ; il est apte à réagir avec le saccharide sous l'effet de la chaleur pour former des liaisons esters qui conduisent à l'obtention d'un réseau polymérique dans le liant final. Ledit réseau polymérique permet d'établir des liaisons au niveau des points de jonction des fibres dans la laine minérale.

L'acide organique polycarboxylique peut se présenter sous la forme d'un monomère ou d'un polymère.

L'acide organique polycarboxylique peut être un acide dicarboxylique, par exemple l'acide oxalique, l'acide malonique, l'acide succinique, l'acide glutarique, l'acide adipique, l'acide pimélique, l'acide subérique, l'acide azélaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, notamment contenant au moins un atome de bore ou de chlore, l'acide tétrahydrophtalique et ses dérivés, notamment contenant au moins un atome de chlore tel que l'acide chlorendique, l'acide isophtalique, l'acide téréphtalique, l'acide mésaconique et l'acide citraconique, ou un précurseur d'acide dicarboxylique, notamment un anhydride tel que l'anhydride maléique, l'anhydride succinique et l'anhydride phtalique ; un acide tricarboxylique, par exemple l'acide citrique, l'acide tricarballylique, l'acide 1,2,4-butanetricarboxylique, l'acide aconitique, l'acide hémimellitique, l'acide trimellitique et l'acide trimésique ; un acide tétracarboxylique, par exemple l'acide 1,2,3,4-butanetétracarboxylique et l'acide pyroméllitique ; ou un polymère d'acide insaturé, par exemple un homopolymère d'acide acrylique ou méthacrylique, ou un copolymère d'acide acrylique ou méthacrylique et d'un ou plusieurs monomères insaturés.

On préfère l'acide citrique, l'acide 1,2,3,4-butanetétracarboxylique, l'acide succinique, l'acide tartrique, l'acide glutamique, l'acide itaconique, l'acide maléique, l'acide citraconique, l'anhydride maléique, l'anhydride succinique et les polymères d'acide (méth)acrylique.

L'acide organique polycarboxylique particulièrement préféré est l'acide citrique, l'acide 1,2,3,4-butanetétracarboxylique et les polymères d'acide (méth)acrylique.

Dans la composition d'encollage, le saccharide représente 5 à 90 % du poids du mélange constitué par le saccharide et l'acide organique polycarboxylique, de préférence 20 à 85 %, et avantageusement 30 à 80 %.

Le catalyseur d'estérification a comme indiqué précédemment pour rôle d'augmenter la vitesse de la réaction d'estérification entre le saccharide et l'acide organique polycarboxylique.

Le catalyseur d'estérification est choisi parmi les phosphites et les hypophosphites de sodium ou de potassium, et tout particulièrement le phosphite de sodium, l'hypophosphite de sodium et les mélanges de ces composés.

La quantité de catalyseur d'estérification dans la composition d'encollage représente généralement 1 à 20 % du poids du saccharide et de l'acide organique polycarboxylique, de préférence 2 à 15 %, et avantageusement 2,5 à 10 %.

L'agent apte à réduire les émissions de COV est choisi parmi les sulfates d'aluminium, de cuivre, de fer, d'aluminium et de potassium (ou alun de potassium) ou d'ammonium, et mieux encore le sulfate de fer, de cuivre ou d'ammonium.

La quantité d'agent apte à réduire les émissions de COV représente généralement 2 à 25 % du poids du saccharide et de l'acide organique polycarboxylique, de préférence 3 à 20 %, et avantageusement 5 à 15 %.

La composition d'encollage conforme à l'invention peut comprendre en outre les additifs conventionnels ci-après dans les proportions suivantes calculées sur la base de 100 parts en poids de saccharide et d'acide organique polycarboxylique :

- 0 à 2 parts de silane, en particulier un aminosilane,
- 0 à 20 parts d'huile, de préférence 4 à 15 parts,
- 0 à 30 parts d'urée et/ou de glycérol, de préférence 0 à 20 parts,

- 0 à 5 parts d'un silicone,
- 0 à 30 parts d'un « extendeur » choisi parmi les dérivés de la lignine tel que le lignosulfonate d'ammonium (LSA) ou le lignosulfonate de sodium, et les protéines animales ou végétales.

Le rôle des additifs est connu et brièvement rappelé : le silane est un agent de couplage entre les fibres et le liant, et joue également le rôle d'agent anti-vieillissement ; les huiles sont des agents anti-poussières et hydrophobes ; l'urée et le glycérol jouent le rôle de plastifiants et permettent d'éviter la prégélification de la composition d'encollage ; le silicone est un agent hydrophobe qui a pour fonction de réduire l'absorption d'eau par le produit d'isolation ; l'« extendeur » est une charge organique soluble ou dispersable dans la composition d'encollage aqueuse qui permet notamment de diminuer le coût de la composition d'encollage.

La composition d'encollage présente un pH acide, de l'ordre de 1 à 4,5 selon l'acide organique polycarboxylique utilisé, de préférence supérieur à 1,5. Avantageusement, le pH est maintenu à une valeur au moins égale à 2, de manière à limiter les problèmes d'instabilité de la composition d'encollage et de corrosion de la ligne de fabrication, grâce à l'ajout d'un composé aminé qui n'est pas apte à réagir avec le saccharide, par exemple une amine tertiaire, notamment la triéthanolamine. La quantité de composé aminé peut représenter jusqu'à 30 parts en poids du poids total de saccharide et d'acide organique polycarboxylique.

Le procédé de fabrication des produits isolants acoustiques et/ou thermiques constitue également un objet de l'invention.

La composition d'encollage est destinée à être appliquée sur des fibres minérales, notamment des fibres de verre ou de roche.

Le procédé de fabrication des produits isolants acoustiques et/ou thermiques utilisant la composition d'encollage précitée constitue également un objet de l'invention. Ce procédé est tel que défini à la revendication 15.

De manière classique, la composition d'encollage est projetée sur les fibres minérales à la sortie du dispositif centrifuge et avant leur collecte sur l'organe récepteur sous la forme d'une nappe de fibres qui est ensuite traitée à une température permettant la réticulation de l'encollage et la formation d'un liant infusible. La réticulation de l'encollage selon l'invention se fait à une température comparable à celle d'une résine formophénolique classique, à une température supérieure ou égale à 110°C, de préférence supérieure ou égale à 130°, et avantageusement supérieure ou égale à 140°C.

Les produits isolants acoustiques et/ou thermiques obtenus à partir de ces fibres encollées se présentent généralement sous la forme d'un matelas ou d'un feutre de laine minérale, de verre ou de roche, ou encore d'un voile de fibres minérales, également de verre ou de roche, destiné notamment à former un revêtement de surface dudit matelas ou dudit feutre.

Les exemples qui suivent permettent d'illustrer l'invention sans toutefois la limiter.

Dans ces exemples, on mesure :

- l'épaisseur du produit après la fabrication et après une durée variable sous compression avec un taux de compression (défini comme étant le rapport de l'épaisseur nominale à l'épaisseur sous compression) égal à 8,0 (exemples 1 à 3) ou 4,8 (exemples 8 et 9). La mesure de l'épaisseur permet d'évaluer la bonne tenue dimensionnelle du produit,
- la résistance en traction selon la norme ASTM C 686-71T sur un échantillon découpé par estampage dans le produit isolant. L'échantillon a la forme d'un tore de 122 mm de longueur, 46 mm de largeur, un rayon de courbure de la découpe du bord extérieur égal à 38 mm et un rayon de courbure de la découpe du bord intérieur égal à 12,5 mm.

L'échantillon est disposé entre deux mandrins cylindriques d'une machine d'essais dont l'un est mobile et se déplace à vitesse constante. On mesure la force de rupture F (en Newton) de l'échantillon et on calcule la résistance en traction RT définie par le rapport de la force de rupture F à la masse de l'échantillon.

La résistance en traction est mesurée après la fabrication (résistance en traction initiale) et après un vieillissement accéléré dans un autoclave à une température de 105°C sous 100 % d'humidité relative pendant 15 minutes (RT15),

- la quantité de produits organiques volatils émis par le produit.

On procède comme suit : dans un dessicateur en verre muni d'une grille à mi-hauteur, on introduit 10 d'eau dans le fond et on place sur la grille, qui n'est pas en contact avec l'eau, un échantillon (5 cm x 6 cm) découpé au centre du produit à tester et un diffuseur contenant une cartouche (Radiello® RAD 147 commercialisée par Sigma Aldrich) qui piège les COV.

Le dessicateur est fermé hermétiquement et placé dans une étuve à 40°C pendant 6 heures.

Le contenu de la cartouche est analysé par chromatographie en phase gazeuse couplée à la spectrométrie de masse (GC/MS) utilisant une colonne capillaire RTX5 MS (commercialisée par Restek), de diamètre égal à 0,25 mm, présentant une épaisseur de la phase stationnaire de 1 μm et une longueur de 30 m, et un injecteur thermodésorbeur.

On mesure les aires sous les pics du chromatogramme et on exprime le pourcentage de COV émis en pourcent par rapport au produit de référence ne contenant pas d'agent apte à réduire les émissions de COV.

## EXEMPLES 1 A 3

On prépare des compositions d'encollage comprenant les constituants figurant dans le tableau 1 (en parts pondérales).

Les compositions d'encollage sont utilisées pour former des produits d'isolation à base de laine minérale.

On fabrique de la laine de verre en continu sur une ligne de production de 1,2 m de large. La laine de verre est formée par la technique de la centrifugation interne dans laquelle la composition de verre fondu est transformée en fibres au moyen d'un outil dénommé assiette de centrifugation : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

De façon classique, une couronne de pulvérisation d'encollage est disposée au-dessous de l'assiette de fibrage de manière à répartir régulièrement la composition d'encollage sur la laine de verre venant d'être formée. La laine minérale ainsi encollée est collectée sur un convoyeur à bande équipé de caissons d'aspiration internes qui retiennent la laine minérale sous forme d'un feutre à la surface du convoyeur. Le feutre est découpé, puis placé dans une étuve maintenue à 270°C où les constituants de l'encollage polymérisent pour former un liant.

Le produit d'isolation obtenu présente une épaisseur nominale de 152 mm et une densité nominale égale à 10 kg/m$^3$.

Les propriétés des produits figurent dans le tableau 1.

A perte au feu similaire, le produit de l'exemple 1 émet moins de COV que celui de l'exemple 3 comparatif. L'exemple 2 qui a une perte au feu plus importante, supérieure à celle de l'exemple 3 comparatif, présente un niveau d'émission de COV plus faible.

## EXEMPLES 4 A 7

On prépare des compositions d'encollage comprenant les constituants figurant dans le tableau 2 (en parts pondérales).

Les compositions d'encollage sont utilisées pour former des produits d'isolation à base de laine de verre, selon la technique décrite dans les exemples 1 à 3, sur une ligne de production de 2,4 m de large.

Le produit d'isolation obtenu à la sortie de l'étuve présente une épaisseur nominale de l'ordre de 254 mm et une densité nominale égale à 7,5 kg/m$^3$.

Les propriétés des produits figurent dans le tableau 2.

Les exemples 4 à 6 selon l'invention présentent un niveau d'émission plus faible que l'exemple 7 comparatif à perte au feu équivalente.

## EXEMPLES 8 ET 9

On procède dans les conditions des exemples 4 à 7 modifiées en ce que les compositions d'encollage ont la composition donnée dans le tableau 3 et le produit d'isolation a une épaisseur nominale égale à 82 mm et une densité nominale égale à 17,5 kg/m$^3$.

Les propriétés des produits figurent dans le tableau 3.

On constate que l'exemple 8 présente un niveau d'émission réduit par rapport à l'exemple 3 comparatif, et ce malgré une perte au feu qui est plus élevée.

Tableau 1

|  | Ex. 1 | Ex. 2 | Ex. 3 (comparatif) |
|---|---|---|---|
| **Composition d'encollage** |  |  |  |
| Saccharide[1] | 62,0 | 62,0 | 62,0 |
| Acide citrique | 38,0 | 38,0 | 38,0 |
| Hyphophosphite de sodium | 5,0 | 5,0 | 5,0 |
| Sulfate de cuivre | 5,0 | - | - |
| Sulfate d'aluminium | - | 5,0 | - |
| γ-aminopropyltriethoxysilane | 0,44 | 0,44 | 0,44 |

(suite)

|  | Ex. 1 | Ex. 2 | Ex. 3 (comparatif) |
|---|---|---|---|
| **Composition d'encollage** | | | |
| Huile minérale | 12,0 | 12,0 | 12,0 |
| Silicone | 0,8 | 0,8 | 0,8 |
| pH | | | |
| à 10 % de matières solides | 1,9 | 1,8 | 2,0 |
| à 3 % de matières solides | 2,2 | 2,0 | 2,4 |
| **Propriétés du produit** | | | |
| Perte au feu (%) | 4,6 | 5,3 | 4,8 |
| Epaisseur (mm) | | | |
| après 24 heures | 161 | n. d. | 175 |
| après 7 jours | 166 | n. d. | 161 |
| après 30 jours | 169 | 169 | 160 |
| Emissions COV (%) | 79,3 | 85,7 | 100 |
| n. d. : non déterminé | | | |
| [1] dextrine présentant un équivalent en dextrose DE égal à 26,5 | | | |

Tableau 2

|  | Ex. 4 | Ex. 5 | Ex. 6 | Ex. 7 (comparatif) |
|---|---|---|---|---|
| **Composition d'encollage** | | | | |
| Saccharide[1] | 62,0 | 62,0 | 62,0 | 62,0 |
| Acide citrique | 38,0 | 38,0 | 38,0 | 38,0 |
| Hyphophosphite de sodium | 5,0 | 5,0 | 5,0 | 5,0 |
| Sulfate de fer | 5,0 | - | - | - |
| Sulfate d'ammonium | - | 5,0 | 10 | - |
| $\gamma$-aminopropyltriethoxysilane | 0,46 | 0,46 | 0,46 | 0,46 |
| Huile minérale | 12,6 | 12,6 | 12,6 | 12,6 |
| Silicone | 0,5 | 0,5 | 0,5 | 0,5 |
| pH | | | | |
| à 10 % de matières solides | 1,9 | 2,2 | 2,2 | 2,0 |
| à 3 % de matières solides | 2,2 | 2,4 | 2,4 | 2,4 |
| **Propriétés du produit** | | | | |
| Perte au feu (%) | 5,5 | 5,4 | 5,3 | 5,2 |
| Emissions COV (%) | 81,3 | 91,6 | 62,4 | 100 |
| [1] dextrine présentant un équivalent en dextrose DE égal à 26,5 | | | | |

Tableau 3

|  | Ex. 8 | Ex. 9 (comparatif) |
|---|---|---|
| **Composition d'encollage** | | |
| Saccharide[1] | 62,0 | 62,0 |
| Acide citrique | 38,0 | 38,0 |
| Hyphophosphite de sodium | 5,0 | 5,0 |
| Sulfate de fer | 5,0 | - |
| $\gamma$-aminopropyltriethoxysilane | 0,5 | 0,5 |
| Huile minérale | 8,0 | 8,0 |

(suite)

|  | Ex. 8 | Ex. 9 (comparatif) |
|---|---|---|
| **Composition d'encollage** | | |
| Silicone | 1,5 | 1,5 |
| pH | | |
| à 10 % de matières solides | 1,9 | 2,0 |
| à 3 % de matières solides | 2,2 | 2,4 |
| **Propriétés du produit** | | |
| Perte au feu (%) | 6,7 | 5,9 |
| Epaisseur (mm) | | |
| après 1 heure | 76,5 | 77,3 |
| après 1 jour | 70,0 | 75,5 |
| après 14 jours | 73,0 | 72,4 |
| après 30 jours | 70,6 | 70,7 |
| après 90 jours | 70,5 | 70,8 |
| Résistance en traction (N/g) | | |
| initiale | 3,84 | 3,82 |
| après vieillissement | 3,36 | 3,54 |
| perte | 12,5 % | 7,3 % |
| Emissions COV (%) | 66,9 | 100 |
| n. d. : non déterminé [1] dextrine présentant un équivalent en dextrose DE égal à 30 | | |

## Revendications

1. Composition d'encollage pour des produits isolants à base de laine minérale, notamment de roche ou de verre, **caractérisée en ce qu'**elle comprend

   - au moins un saccharide,
   - au moins un acide organique polycarboxylique,
   - au moins un catalyseur d'estérification choisi parmi les phosphites et les hypophosphites de sodium ou de potassium, et
   - au moins un agent apte à réduire les émissions de composés organiques volatils (COV) choisi parmi les sulfates d'aluminium, de cuivre, de fer, d'aluminium et de potassium (ou alun de potassium) ou d'ammonium.

2. Composition d'encollage selon la revendication 1, **caractérisée en ce que** le saccharide est choisi parmi les monosaccharides renfermant 3 à 8 atomes de carbone, de préférence les aldoses et avantageusement les aldoses contenant 5 à 7 atomes de carbone.

3. Composition d'encollage selon la revendication 1, **caractérisée en ce que** le saccharide est un diholoside, un triholoside, un tétraholoside, un pentaholoside, une dextrine ou son produit d'hydrogénation, une mélasse ou un amidon.

4. Composition d'encollage selon l'une des revendications 1 à 3, **caractérisée en ce que** le saccharide est le glucose, une dextrine ou une mélasse, de préférence le glucose ou une dextrine.

5. Composition d'encollage selon l'une des revendications 1 à 4, **caractérisée en ce que** l'acide organique polycarboxylique comprend au moins deux fonctions carboxyliques, de préférence au plus 50, avantageusement au plus 30 et mieux encore au plus 20 fonctions carboxyliques.

6. Composition d'encollage selon la revendication 5, **caractérisée en ce que** l'acide organique polycarboxylique est l'acide citrique, l'acide 1,2,3,4-butanetétracarboxylique, l'acide succinique, l'acide tartrique, l'acide glutamique, l'acide itaconique, l'acide maléique, l'acide citraconique, l'anhydride maléique, l'anhydride succinique ou un polymère d'acide (méth)acrylique.

7. Composition d'encollage selon la revendication 6, **caractérisée en ce que** l'acide organique polycarboxylique est l'acide citrique, l'acide 1,2,3,4-butanetétracarboxylique ou un polymère d'acide (méth)acrylique.

8. Composition d'encollage selon l'une des revendications 1 à 7, **caractérisée en ce que** le saccharide représente 5 à 90 % du poids du mélange constitué par le saccharide et l'acide organique polycarboxylique, de préférence 20 à 85 %, et avantageusement 30 à 80 %.

9. Composition d'encollage selon l'une des revendications 1 à 8, **caractérisée en ce que** le catalyseur d'estérification est le phosphite de sodium, l'hypophosphite de sodium et les mélanges de ces composés.

10. Composition d'encollage selon l'une des revendications 1 à 9, **caractérisée en ce que** le catalyseur d'estérification représente généralement 1 à 20 % du poids du saccharide et de l'acide organique polycarboxylique, de préférence 2 à 15 %, et avantageusement 2,5 à 10 %.

11. Composition d'encollage selon l'une des revendications 1 à 10, **caractérisée en ce que** l'agent apte à réduire les émissions de COV est un sulfate de fer, de cuivre ou d'ammonium.

12. Composition d'encollage selon l'une des revendications 1 à 11, **caractérisée en ce que** la quantité d'agent apte à réduire les émissions de COV représente 2 à 25 % du poids du saccharide et de l'acide organique polycarboxylique, de préférence 3 à 20 %, et avantageusement 5 à 15 %.

13. Composition d'encollage selon l'une des revendications 1 à 12, **caractérisée en ce qu'**elle comprend en outre les additifs conventionnels ci-après dans les proportions suivantes calculées sur la base de 100 parts en poids de saccharide et d'acide organique polycarboxylique :

   - 0 à 2 parts de silane, en particulier un aminosilane,
   - 0 à 20 parts d'huile, de préférence 4 à 15 parts,
   - 0 à 30 parts d'urée et/ou de glycérol, de préférence 0 à 20 parts,
   - 0 à 5 parts d'un silicone,
   - 0 à 30 parts d'un « extendeur » choisi parmi les dérivés de la lignine tel que le lignosulfonate d'ammonium (LSA) ou le lignosulfonate de sodium, et les protéines animales ou végétales.

14. Produit isolant acoustique et/ou thermique à base laine minérale, notamment de verre ou de roche, encollée à l'aide de la composition d'encollage selon l'une des revendications 1 à 13.

15. Procédé de fabrication d'un produit isolant acoustique et/ou thermique à base de laine minérale selon la revendication 14, selon lequel on fabrique la laine minérale ou les fibres minérales, on projette sur ladite laine ou lesdites fibres une composition d'encollage et on traite ladite laine ou lesdites fibres à une température permettant la réticulation de l'encollage et la formation d'un liant infusible, **caractérisé en ce que** la composition d'encollage comprend

   - au moins un saccharide,
   - au moins un acide organique polycarboxylique,
   - au moins un catalyseur d'estérification choisi parmi les phosphites et les hypophosphites de sodium ou de potassium, et
   - au moins un agent apte à réduire les émissions de composés organiques volatils (COV) choisi parmi les sulfates d'aluminium, de cuivre, de fer, d'aluminium et de potassium (ou alun de potassium) ou d'ammonium.

**Patentansprüche**

1. Bindemittelzusammensetzung für Dämmstoffe auf Basis von Mineralwolle, insbesondere Steinwolle oder Glaswolle, **dadurch gekennzeichnet, dass** sie umfasst:

   - mindestens ein Saccharid,
   - mindestens eine organische Polycarbonsäure,

- mindestens einen Veresterungskatalysator, ausgewählt aus Phosphiten und Hypophosphiten von Natrium oder Kalium, und
- mindestens ein Mittel, das in der Lage ist, die Emissionen flüchtiger organischer Verbindungen (VOC) zu reduzieren, ausgewählt aus den Aluminium-, Kupfer-, Eisen-, Aluminium- und Kalium- (oder Kalialaun) oder Ammoniumsulfaten.

2. Bindemittelzusammensetzung nach Anspruch 1, **dadurch gekennzeichnet, dass** das Saccharid aus den Monosacchariden mit 3 bis 8 Kohlenstoffatomen, vorzugsweise Aldosen, und vorteilhafterweise Aldosen mit 5 bis 7 Kohlenstoffatomen ausgewählt ist.

3. Bindemittelzusammensetzung nach Anspruch 1, **dadurch gekennzeichnet, dass** das Saccharid ein Diholosid, ein Triholosid, ein Tetraholosid, ein Pentaholosid, ein Dextrin oder dessen Hydrierprodukt, eine Melasse oder eine Stärke ist.

4. Bindemittelzusammensetzung nach einem der Ansprüche 1 bis 3, **dadurch gekennzeichnet, dass** das Saccharid Glucose, ein Dextrin oder eine Melasse, vorzugsweise Glucose oder ein Dextrin, ist.

5. Bindemittelzusammensetzung nach einem der Ansprüche 1 bis 4, **dadurch gekennzeichnet, dass** die organische Polycarbonsäure mindestens zwei Carboxylfunktionen, vorzugsweise höchstens 50, vorteilhafterweise höchstens 30 und noch besser höchstens 20 Carboxylfunktionen umfasst.

6. Bindemittelzusammensetzung nach Anspruch 5, **dadurch gekennzeichnet, dass** die organische Polycarbonsäure Zitronensäure, 1,2,3,4-Butantetracarbonsäure, Bernsteinsäure, Weinsäure, Glutaminsäure, Itaconsäure, Maleinsäure, Citraconsäure, Maleinsäureanhydrid, Bernsteinsäureanhydrid oder ein (Meth)acrylsäurepolymer ist.

7. Bindemittelzusammensetzung nach Anspruch 6, **dadurch gekennzeichnet, dass** die organische Polycarbonsäure Zitronensäure, 1,2,3,4-Butantetracarbonsäure oder ein (Meth)acrylsäurepolymer ist.

8. Bindemittelzusammensetzung nach einem der Ansprüche 1 bis 7, **dadurch gekennzeichnet, dass** das Saccharid 5 bis 90 Gew.-% des Gemischs aus Saccharid und organischer Polycarbonsäure, vorzugsweise 20 bis 85 %, und vorteilhafterweise 30 bis 80 % darstellt.

9. Bindemittelzusammensetzung nach einem der Ansprüche 1 bis 8, **dadurch gekennzeichnet, dass** der Veresterungskatalysator Natriumphosphit, Natriumhypophosphit und Mischungen dieser Verbindungen ist.

10. Bindemittelzusammensetzung nach einem der Ansprüche 1 bis 9, **dadurch gekennzeichnet, dass** der Veresterungskatalysator im Allgemeinen 1 bis 20 Gew.-% des Saccharids und der organischen Polycarbonsäure, vorzugsweise 2 bis 15 % und vorteilhafterweise 2,5 bis 10 % darstellt.

11. Bindemittelzusammensetzung nach einem der Ansprüche 1 bis 10, **dadurch gekennzeichnet, dass** das Mittel, das in der Lage ist, VOC-Emissionen zu reduzieren, ein Eisen-, Kupfer- oder Ammoniumsulfat ist.

12. Bindemittelzusammensetzung nach einem der Ansprüche 1 bis 11, **dadurch gekennzeichnet, dass** die Menge des Mittels, das in der Lage ist, VOC-Emissionen zu reduzieren, 2 bis 25 Gew.-% des Saccharids und der organischen Polycarbonsäure, vorzugsweise 3 bis 20 % und vorteilhafterweise 5 bis 15 % darstellt.

13. Bindemittelzusammensetzung nach einem der Ansprüche 1 bis 12, **dadurch gekennzeichnet, dass** sie ferner die nachstehenden herkömmlichen Additive in den folgenden Anteilen umfasst, berechnet auf der Basis von 100 Gewichtsteilen Saccharid und organischer Polycarbonsäure:

   - 0 bis 2 Teile Silan, insbesondere ein Aminosilan,
   - 0 bis 20 Teile Öl, vorzugsweise 4 bis 15 Teile,
   - 0 bis 30 Teile Harnstoff und/oder Glycerol, vorzugsweise 0 bis 20 Teile,
   - 0 bis 5 Teile eines Silikons,
   - 0 bis 30 Teile eines "Streckmittels", ausgewählt aus den Derivaten des Lignins wie dem Ammonium-Lignosulfonat (ALS) oder dem Natrium-Lignosulfonat und den tierischen oder pflanzlichen Proteinen.

14. Schall- und/oder Wärmedämmstoff auf Basis von Mineralwolle, insbesondere Glaswolle oder Steinwolle, gebunden mithilfe der Bindemittelzusammensetzung nach einem der Ansprüche 1 bis 13.

15. Verfahren zur Herstellung eines schall- und/oder wärmedämmenden Produkts auf Basis von Mineralwolle nach Anspruch 14, gemäß dem eine Mineralwolle oder Mineralfasern hergestellt werden, auf diese Wolle oder diese Fasern eine Bindemittelzusammensetzung aufgetragen wird und diese Wolle oder diese Fasern bei einer Temperatur behandelt werden, die die Vernetzung des Bindemittels und die Bildung eines nichtschmelzbaren Bindemittels erlaubt, **dadurch gekennzeichnet, dass** die Bindemittelzusammensetzung umfasst:

- mindestens ein Saccharid,
- mindestens eine organische Polycarbonsäure,
- mindestens einen Veresterungskatalysator, ausgewählt aus Phosphiten und Hypophosphiten von Natrium oder Kalium, und
- mindestens ein Mittel, das in der Lage ist, die Emissionen flüchtiger organischer Verbindungen (VOC) zu reduzieren, ausgewählt aus den Aluminium-, Kupfer-, Eisen-, Aluminium- und Kalium- (oder Kalialaun) oder Ammoniumsulfaten.

## Claims

1. Sizing composition for insulating products based on mineral wool, in particular of rock or of glass wool, **characterized in that** it comprises

- at least one saccharide,
- at least one organic polycarboxylic acid,
- at least one esterification catalyst selected from sodium or potassium phosphites and hypophosphites, and
- at least one agent capable of reducing the emissions of volatile organic compounds (VOCs) chosen from aluminium sulphate, copper sulphate, iron sulphate, potassium aluminium sulphate (or potassium alum) or ammonium sulphate.

2. Sizing composition according to Claim 1, **characterized in that** the saccharide is chosen from monosaccharides including from 3 to 8 carbon atoms, preferably aldoses and advantageously aldoses comprising from 5 to 7 carbon atoms.

3. Sizing composition according to Claim 1, **characterized in that** the saccharide is a disaccharide, a trisaccharide, a tetrasaccharide, a pentasaccharide, a dextrin or its hydrogenation product, a molasses or a starch.

4. Sizing composition according to one of Claims 1 to 3, **characterized in that** the saccharide is glucose, a dextrin or a molasses, preferably glucose or a dextrin.

5. Sizing composition according to one of Claims 1 to 4, **characterized in that** the organic polycarboxylic acid comprises at least two carboxyl functional groups, preferably at most 50 carboxyl functional groups, advantageously at most 30 carboxyl functional groups and better still at most 20 carboxyl functional groups.

6. Sizing composition according to Claim 5, **characterized in that** the organic polycarboxylic acid is citric acid, 1,2,3,4-butanetetracarboxylic acid, succinic acid, tartaric acid, glutamic acid, itaconic acid, maleic acid, citraconic acid, maleic anhydride, succinic anhydride or a (meth)acrylic acid polymer.

7. Sizing composition according to Claim 6, **characterized in that** the organic polycarboxylic acid is citric acid, 1,2,3,4-butanetetracarboxylic acid or a (meth)acrylic acid polymer.

8. Sizing composition according to one of Claims 1 to 7, **characterized in that** the saccharide represents from 5 to 90% of the weight of the mixture composed of the saccharide and the organic polycarboxylic acid, preferably from 20 to 85% and advantageously from 30 to 80%.

9. Sizing composition according to one of Claims 1 to 8, **characterized in that** the esterification catalyst is chosen from sodium phosphite, sodium hypophosphite and mixtures thereof.

10. Sizing composition according to one of Claims 1 to 9, **characterized in that** the esterification catalyst represents generally from 1 to 20% of the weight of the saccharide and the organic polycarboxylic acid, preferably from 2 to 15% and advantageously from 2.5 to 10%.

11. Sizing composition according to one of Claims 1 to 10, **characterized in that** the agent capable of reducing the VOC emissions is iron sulphate, copper sulphate or ammonium sulphate.

12. Sizing composition according to one of Claims 1 to 11, **characterized in that** the amount of agent capable of reducing the VOC emissions represents from 2 to 25% of the weight of the saccharide and organic polycarboxylic acid, preferably from 3 to 20% and advantageously from 5 to 15%.

13. Sizing composition according to one of Claims 1 to 12, **characterized in that** it additionally comprises the conventional additives below in the following proportions, calculated on the basis of 100 parts by weight of saccharide and organic polycarboxylic acid:

- from 0 to 2 parts of silane, in particular an aminosilane,
- from 0 to 20 parts of oil, preferably from 4 to 15 parts,
- from 0 to 30 parts of urea and/or glycerol, preferably from 0 to 20 parts,
- from 0 to 5 parts of a silicone,
- from 0 to 30 parts of an "extender" chosen from lignin derivatives, such as ammonium lignosulphonate (ALS) or sodium lignosulphonate, and animal or plant proteins.

14. Acoustic and/or thermal insulating product based on mineral wool, in particular of glass or of rock, sized using the sizing composition according to one of Claims 1 to 13.

15. Process for the manufacture of an acoustic and/or thermal insulating product based on mineral wool according to Claim 14, according to which the mineral wool or the mineral fibres are manufactured, a sizing composition is projected onto the said wool or the said fibres and the said wool or the said fibres is/are treated at a temperature which makes possible the crosslinking of the size and the formation of an infusible binder, **characterized in that** the sizing composition comprises

- at least one saccharide,
- at least one organic polycarboxylic acid,
- at least one esterification catalyst selected from sodium or potassium phosphites and hypophosphites, and
- at least one agent capable of reducing the emissions of volatile organic compounds (VOCs) chosen from aluminium sulphate, copper sulphate, iron sulphate, potassium aluminium sulphate (or potassium alum) or ammonium sulphate.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5340868 A
- US 5318990 A
- US 5661213 A
- US 6331350 B
- US 20030008978 A
- US 5977232 A
- US 5932689 A
- US 6071994 A
- US 6099773 A
- US 6146746 A
- US 20020091185 A

- US 6299936 B
- US 20020188055 A
- US 20040002567 A
- US 20050215153 A
- US 5895804 A
- WO 2007014236 A
- WO 2009019232 A
- WO 2009019235 A
- WO 2009080938 A
- WO 2011045531 A